# EUROPEAN PATENT APPLICATION

(11) **EP 3 653 085 A1**
(43) Date of publication of application: **20.05.2020**
(21) Application number: 19208401.0
(22) Date of filing: 11.11.2019
(51) Int. Cl.: A47J 31/06, A47J 31/44

(54) **FILTER HOLDER FOR ESPRESSO MACHINES WITH DAMPED OPERATING HANDLE**

(30) Priority: 16.11.2018 IT 201800010404
(71) Applicant: Gruppo Cimbali S.p.A., 20082 Binasco (MI) (IT)
(72) Inventor: Almagor, Omri, 20082 Binasco MI (IT)
(74) Representative: Perani & Partners S.p.A.

(57) **Abstract**

A filter holder (1) for espresso machines comprising a basket-shaped body (2) with a closed bottom (3) and an open upper end (4), delimited by a frustoconical side wall (5), made of a metal material, a filter, which is suitable for containing a predetermined dose of coffee grounds, placed within the basket-shaped body (2), at least one channel (6) extending out of the bottom (3) of the basket-shaped body (2), for discharging the beverage formed in the filter, the side wall (5) of said basket-shaped body (2) having coupling means (7) for the filter holder (1) to be positioned at the hot water delivery point of the machine for forming the beverage, as well as a rod-shaped handle (8), radially connected to a point of the side wall (5) of the basket-shaped body (2).

An intermediate element (17) is provided between said handle (8) and the side wall (5) of the basket-shaped body (2), for accommodating angular deflection of said rod-shaped handle (8) relative to the side wall (5) of the basket-shaped body (2).

## Description

### DESCRIPTION

The present invention relates to a filter holder structure for espresso machines, in particular for commercial use, of the type having a plurality of dispensing points that can also operate simultaneously.

Such machines are known to be namely installed in bars, restaurants and similar public commercial concerns.

The machines installed in such places of use are exposed to peak beverage dispensing demand at certain times, such as at daily meal times.

At these times the operators of these machines are exposed to highly intense activity.

The activity comprises highly repetitive movements, especially with the arms and the wrist, to remove the filter holder from the bayonet fitting of the corresponding dispensing point of the machine, upon completion of the beverage dispensing, to knock out the dose of spent coffee from the overturned filter holder against a specially designed surface.

These movements are followed by the movements required to place the filter holder under a dosing device to load a new dose of coffee grounds and finally the reposition of the filer holder in the bayonet fitting of one of the dispensing points of the machine.

Further movements are required to present the cup containing the dispensed beverage and to place a new clean cup under the spout of the filter holder. The aforementioned operations require the filter holder to be held by the operator with one hand on a conventional filter holder handle.

The handle conventionally consists of a rod element made of wood or a material having a low thermal conductivity, which is radially fixed to the metal basket of the filter holder, with the filter therein suitable to contain the single or double dose, as applicable, of coffee grounds.

The above combination of operations cause considerable fatigue at the operator's arm joints, especially at the wrist, which cause a kind of articular disorder known as epicondylitis and usually affects bartenders.

Here, the conventional known filter holder structure, particularly concerning the connection of the handle to the basket of the filter holder, which is mainly responsible for such drawback for the operator, involves a technical problem for which a solution is desired.

Therefore, the object of the present invention is to modify the structure of the filter holder to eliminate or at least attenuate its potential hazards for the health of the operator.

This and other objects, as better explained hereafter, are fulfilled by a filter holder structure of the invention which is characterized as defined in claim 1 hereinafter.

The invention will be now further described with reference to a preferred embodiment thereof, as shown in the annexed drawings, given by way of illustration and without limitation, in which:
- Figure 1 shows a plan view of the filter holder;
- Figure 2 shows a side view of the filter holder;
- Figure 3 shows a sectional view of the filter holder, as viewed along the axis AA of Figure;

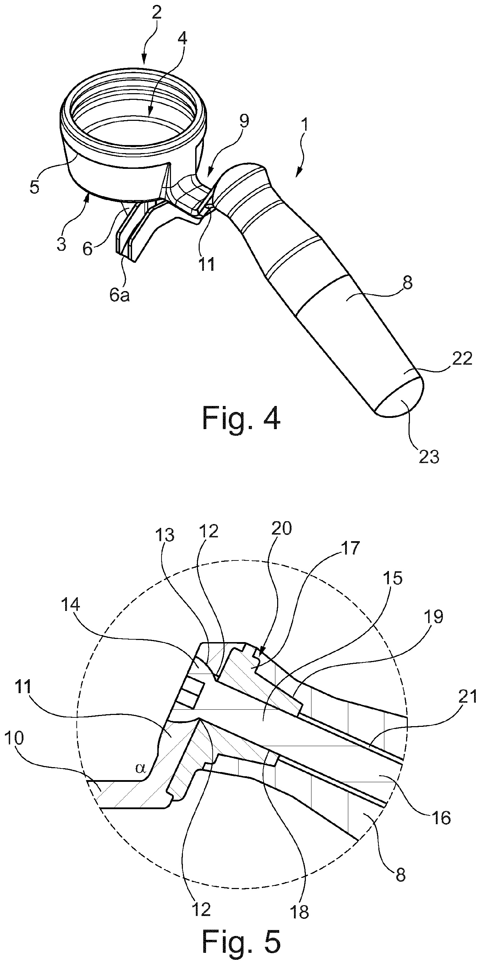

- Figure 4 shows a perspective view of the filter holder of Figure 1;
- Figure 5 shows, in enlarged scale, a section of the portion of the handle in which connection is provided to the basket of the filter holder.

Referring to the above figures, the filter holder has been generally referenced 1.

It conventionally comprises a basket-shaped body 2, with a closed bottom 3 and an open top end 4, delimited by a frustoconical side wall 5.

A filter, not shown, suitable to contain a predetermined dose of coffee grounds, is placed within the basket-shaped body 2 and is suitable to be removed and introduced through the open top 4.

At least one channel 6 that comes out of the basket-shaped body 2 is conventionally provided for delivering the beverage formed in the filter into a cup to be placed under the spout 6a.

The side wall 5 of the basket-shaped body 2 is equipped with coupling means, consisting of a pair of opposite tabs 7, for bayonet connection of the filter holder 1 to the hot water dispensing point of the beverage forming machine, in a conventional known manner.

The filter holder 1 is operated by the operator by holding a rod-shaped handle 8 with one hand, which handle is radially connected to the side wall 5 of the basket-shaped body 2, and is formed with a thermally non-conducting material, such as wood or plastic.

Namely, according to the invention, the radial connection of the handle 8 to the wall 5 of the basket-shaped body 2, is obtained by an appendage 9, comprising a first straight section 10, that projects out of the basket-shaped body 2, and a second section 11, that forms an angle, referenced α, with the section 10 to face the side wall 5.

The section 11 of the appendage 9 has a circular hole 12 whose wall 13, formed in the thickness of the section 11, has a hemispherical shape.

This spherical portion 13 receives the head 14, that has a hemispherical shape mating that of the surface 13, and is part of a first end 15 of a shank 16 that is used to connect the rod-shaped handle 8 to the basket-shaped body 2.

An intermediate body 17 is placed proximate to the angled section 11 of the appendage 9, and is formed of an elastomeric material with a substantial degree of elasticity, having a through hole 18 that receives the end 15 of the shank 16 therethrough.

The aforementioned intermediate body 17 is housed within a recess 19 formed in the end 20 of the handle 8, which recess is joined to an axial recess 21 in which the shaft 16 extends to the end 22 of the handle 8.

In this end, a plug 23, having a recess 24 is press-fitted on the end 25 of the shank 16 thereby causing the handle 8 to be coupled to the section 11 of the appendage 9 and hence to the wall 5 of the basket-shaped body 2.

It shall be noted that the value of the angle α is selected to impart an inclination to the section 11 of the appendage 9 that will optimize the ergonomics of the position of the handle 8 and, in particular, to place the end of the spout 6a and the end 22 of the handle 8 on the same plane P.

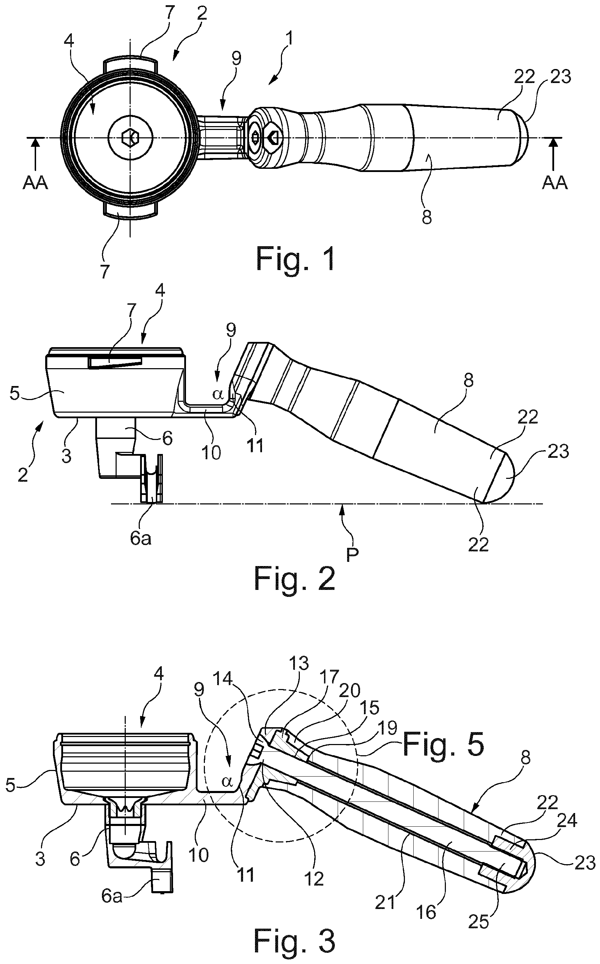

This will cause the opening 4 of the basket-shaped body 2 of filter holder to have a horizontal orientation, when it is placed on a plane, like the one referenced P in Figure 2, thereby facilitating compression of the dose of coffee grounds in the filter using the conventional manual presser. According to the invention, when the filter is emptied, after beverage dispensing, by knocking the overturned basket-shaped body 2 held by the operator by the handle 8, the knocking action on the basket-shaped body 2 is transferred to the handle 6 after being damped or attenuated by the intermediate body 17 made of a substantially elastic material and with the possibility of providing angular displacements between the hemispherical surfaces of the wall 13 of the hole 12 and the head 14 of the first end 15 of the shank 16.

The angular movement for bayonet connection of the filter holder 1, via the pair of wings 7, to the hot water dispensing point, according to the invention, also reaches its limit stop without the impact that, in the prior art filter holder structure, would be transferred to the handle 8 and from the latter to the hand of the operator, and would hence cause the aforementioned drawbacks.

## Claims

1. A filter holder (1) for espresso machines comprising a basket-shaped body (2) with a closed bottom (3) and an open upper end (4), delimited by a frustoconical side wall (5), made of a metal material, a filter, which is designed to contain a predetermined dose of ground coffee, placed within the basket-shaped body (2), at least one channel (6) extending out of the bottom (3) of the basket-shaped body (2), for discharging the beverage formed in the filter, the side wall (5) of said basket-shaped body (2) having coupling means (7) for the filter holder (1) to be positioned at the hot water delivery point of the machine for forming the beverage, as well as a rod-shaped handle (8), radially connected to a point of the side wall (5) of the basket-shaped body (2), an intermediate element (17) for accommodating the angular deflection of said rod-shaped handle (8) relative to the side wall (5) of the basket-shaped body (2), **characterized in that** said rod-shaped handle (8) is connected to said side wall (5) of the basket-shaped body (2) of the filter holder by means of an appendage (9) radially projecting out of said side wall (5) and **in that** said intermediate element (17) is placed between said rod-shaped handle (8) and the said appendage (9) radially projecting out of the side wall (5) of the basket-shaped body.

2. A filter holder according to claim 1, wherein said intermediate element (17) for accommodating the angular deflections of said rod-shaped handle (8) relative to the side wall (5) of the basket-shaped body (2) is made of a body of elastomeric material.

3. A filter holder as claimed in claims 1 or 2, **characterized in that** said appendage (9) radially projecting out of said side wall (5) of the basket-shaped body (2) of the filter holder comprises a section (10) parallel to the bottom surface (3) of the basket-shaped body (2) and a section (11) inclined to the side wall (5) of the basket-shaped body (2).

4. A filter holder as claimed in claim 3, wherein the angle (α) of inclination of said inclined section (11) of the appendage (9) relative to the section (10) of the same appendage (9) parallel to the bottom (3) of the basket-shaped body (2) has a predetermined value greater than 90° for improving ergonomics of the handle (8) of the filter holder (1) by the operator.

5. A filter holder as claimed in any of claims 1 to 4, **characterized in that** said handle (8) is fixed to said inclined section (11) of said appendage (9), by engagement of a corresponding first end (15) in a hemispherical cavity (12, 13) formed in said inclined section (11), said end being complementary to said hemispherical cavity (13), and by engagement of a shank (16), extending through said intermediate element (17) into a cavity (21) axially formed in said rod-shaped handle (8) and fastened thereto by means of a screw member (23), at its second end (25).
